Europäisches Patentamt

European Patent Office

Office européen des brevets

(19)

(11) **EP 1 734 767 A1**

(12) **EUROPEAN PATENT APPLICATION**

(43) Date of publication:
**20.12.2006 Bulletin 2006/51**

(51) Int Cl.:
*H04N 7/26* (2006.01)       *H04N 5/14* (2006.01)

(21) Application number: **05012682.0**

(22) Date of filing: **13.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **SONY DEUTSCHLAND GmbH
50829 Köln (DE)**

(72) Inventors:
• **Incesu, Yalcin
  Hedelfingerstrasse 61
  70327 Stuttgart (DE)**

• **Erdler, Oliver
  Hedelfingerstrasse 61
  70327 Stuttgart (DE)**
• **Tappermann, Jörg
  Hedelfingerstrasse 61
  70327 Stuttgart (DE)**

(74) Representative: **Müller - Hoffmann & Partner
Patentanwälte,
Innere Wiener Strasse 17
81667 München (DE)**

(54) **Method for processing digital image data**

(57)      Proposed is a method for processing digital image data (ID), wherein a step (S2) of motion estimation (ME) is performed based on a subdivision (Sj; j = 0, 1, 2, ...) of images (I1, I2) to be processed. A refinement of the subdivisions (Sj; j = 0, 1, 2, ...) is controlled in the neighbourhood of boundaries of moving objects within said images (I1, I2) based on a global refinement condition. According to the present invention the global refinement condition is based on properties of an already determined motion vector field (MVFj; j = 0, 1, 2, ...).

```
        START
          │
          ▼
┌─────────────────────┐
│  Receive Image Data │
│  ID(I1,I2) as an Input I  │──～ S1
└─────────────────────┘
          │
          ▼
┌─────────────────────┐
│  Motion Estimation ME │──～ S2
│   on ID(I1,I2) → MED   │
└─────────────────────┘
          │
          ▼
┌─────────────────────┐
│  Provide MED(MVF,MV)  │──～ S3
│   as an Output O       │
└─────────────────────┘
          │
          ▼
        END
```

Fig. 1

EP 1 734 767 A1

**Description**

The present invention relates to a method for processing digital image data. More particularly, the present invention relates to an object boundary accurate motion estimation.

In the field of image processing so-called motion estimation processes are important for image conversion systems, but they are at the same time connected with a high computational load. Additionally, it is even more complicated to avoid during the processes of motion estimation artefacts and sources of artefacts which might come up in further processing steps.

It is therefore an object of the present invention to provide a method for processing digital image data wherein motion estimation can be realized in a comparable simple and reliable manner, i.e. with a reduced burden of computation and at the same time with a reduced amount of artefacts.

The object is achieved according to the present invention by a method for processing digital image data with the features according to independent claim 1. Preferred embodiments of the inventive method for processing digital image data are within the scope of the dependent sub claims. The object is further achieved by an apparatus for processing digital image data, by a computer program product, and by a computer readable storage medium according to independent claims 16, 17, and 18, respectively.

According to the present invention the method for processing digital image data comprises a step of providing digital image data to be processed, in particular as input data, said digital image data containing at least a sequence of consecutive images, a step of motion estimation with respect to said images in order to generate a motion vector field MVF, MVFj of a plurality a motion vectors MV, $MV_{j,k}$ describing in its entirety the motion of imaged objects in said images and in order to generate motion estimation data, and a step of providing as a processing result said motion estimation data, in particular as output data, wherein said step of motion estimation is performed based on an subdivision Sj of said images into an identical plurality of respective image cells completely covering said images the refinement of said subdivision Sj of said images in a neighbourhood of boundaries of moving objects within said images being controlled by a first or general refinement condition, and wherein said first or general refinement condition is based on properties of an already determined motion vector field MVF, MVFj or a part thereof.

It is therefore a basic idea of the present invention to use a first or general refinement condition based on properties of an already determined motion vector field. Therefore, it is not necessary to know the location of an moving object in order to find out the boundary of the object which moves from image to image. The first or general refinement condition based on the already determined motion vector field is sufficient for controlling the refinement process with respect to the respective image cells and geometries as well as with respect to the motion vector field.

According to a preferred embodiment of the method for processing digital image data according to the present invention wherein said first or global refinement condition is based on properties of a most recently determined motion vector field MVFj-1 (j = 1, 2, ...) $MVF_j$ - or a part thereof - corresponding to a most recent subdivision Sj-1 (j = 1, 2, ...) of said images.

Additionally or alternatively, according to a further preferred embodiment of the method for processing digital image data according to the present invention — if a refinement from a given subdivision Sj (j = 0, 1, 2, ...) of said images to a next more refined subdivision Sj+1 (j = 0, 1, 2, ...) of said images is carried out - an image cell $c1_{j,k}$, $c2_{j,k}$ is refined if and only if for the corresponding motion vector cell $cMV_{j,k}$ or motion vector $MV_{j,k}$ of the corresponding most recent motion vector field MVFj-1 (j = 1, 2, ...) a second or local refinement condition is fulfilled.

In this case said second or local refinement condition may be based on properties of a most recently determined motion vector field MVFj-1 (j = 1, 2, ...) corresponding to a most recent subdivision Sj-1 (j = 1, 2, ...) of said images according to a further embodiment of the method for processing digital image data according to the present invention.

Still further additionally or alternatively, according to an advantageous embodiment of the method for processing digital image data according to the present invention said second or local refinement condition may be fulfilled if at least one next neighboured motion vector cell $cMV_{j,k}$, or motion vector $MV_{j,k}$, of said most recent motion vector field MVFj-1 (j = 1, 2, ...) differs to a given extent from the given motion vector cell $CMV_{j,k}$ or motion vector $MV_{j,k}$ in question with respect to its absolute value and/or its direction.

According to a further embodiment of the method for processing digital image data according to the present invention wherein one or both of said first or general refinement condition and said second or local refinement condition may be estimated with respect to a part or fraction of said motion vector field MVFj-1 for j = 1, 2, ..., in particular in a spatially restricted or localized manner, in a spatially adaptive manner, depending on image properties, and/or depending on motion classifications, e.g. as being zooming, rotation or the like.

Said motion vector cells $cMV_{j,k}$ and said corresponding motion vector $MV_{j,k}$ may be compared with respect to one of a threshold vector β and threshold value β according to an advantageous embodiment of the method for processing digital image data according to the present invention.

In this case, said threshold vector $\vec{\beta}$ may be a zero vector and said threshold value β may be zero, i. e. $\vec{\beta} = \vec{0}$ and β = 0, respectively.

Alternatively, said threshold vector $\vec{\beta}$ differs from a zero vector or said threshold value β differs from zero, i.e. $\vec{\beta} \neq \vec{0}$ and β≠0, respectively, according to a still further advantageous embodiment of the method for processing digital image data according to the present invention.

In each case, said first or global refinement condition and/or said second or local refinement condition may preferably alternatively or additionally be based on a respective refinement condition function Δ and in particular on a common refinement condition function Δ.

According to a preferred embodiment of the method for processing digital image data according to the present invention said refinement condition function Δ may have for each given motion vector cell $cMV_{j,k}$ or motion vector $MV_{j,k}$ of said most recent motion vector field MVFj-1 ( j = 1, 2, ...) in question the form

$$\Delta\left(MV_{j,k}\right) = \frac{1}{N_{neighbour}} \cdot \sum_{l=1, l\neq k}^{Nneighbour} \left\|MV_{j,l} - MV_{j,k}\right\|,$$

where the sum counts every neighboured motion vector cell until the complete entirety of all neighbourhood cells is covered.

Alternatively, said second or local refinement condition may be fulfilled for a given image cell $c1_{j,k}$, $c2_{j,k}$ if said image cell $c1_{j,k}$, $c2_{j,k}$ is at least touched or intersected by or positioned in a neighbourhood of a boundary or contour of at least one moving object in said images.

The determination or estimation of motion vectors $MV_{j+1,k}$ of a following motion vector field MVFj+1 (j = 0, 1, 2, ...) according to a following and more refined subdivision Sj+1 (j = 0, 1, 2, ...) may be based on estimates for the most recent motion vectors $MV_{j,k}$ of a most recent motion vector field MVFj (j = 0, 1, 2, ...) according to a most recent subdivision Sj (j = 0, 1, 2, ...), in particular as predictor values, according to a still further preferred embodiment of the method for processing digital image data according to the present invention.

Preferably, according to a further embodiment of the method for processing digital image data according to the present invention said method may realize a process of format conversion.

Further, according to a further embodiment of the method for processing digital image data according to the present invention said method may realize a process of frame rate conversion, in particular from 25 Hz to 50 Hz.

It is a further aspect of the present invention to provide an apparatus for processing digital image data which is adapted and which comprises means for carrying out a method processing digital image data according to the present invention and the steps thereof.

It is still a further aspect of the present invention to provide a computer program product comprising computer program means which is adapted to realize a method for processing digital image data according to the present invention and the steps thereof when it is executed on a computer or a digital signal processing means.

It is still a further aspect of the present invention to provide a computer readable storage medium comprising a computer program product according the present invention.

These and further aspects of the present invention will be further discussed in the following:

The present invention relates in particular inter alia to an object boundary accurate motion estimation.

This invention describes in particular inter alia a new method for motion estimation or a ME process with an improved accuracy for motion vectors along the border of moving objects.

One problem of ME is the insufficient accuracy at object boundaries., which results in disturbing artefacts in later processing steps like for example the halo effect in case of video format conversion. The basic idea of this invention is to refine the motion vector field in such critical areas along the border of moving objects by a subsequent, more accurate ME process.

Our new method performs an initial ME process, which gives a coarse description of the object motion. Large transitions between different motion types coincide roughly with the object boundaries. A subsequent estimation process refines the vector field along such critical transitions, by re-estimating these areas with a finer block grid, the previously estimated vectors as predictors and an adapted parameter set. The improved vector field can again be re-estimated in critical areas with an even more accurate estimation process and so on. This results in a homogenous motion vector field, which covers object boundaries very closely and therefore prevents artefacts in later processing.

Current state of the art motion estimation algorithms are adapted in order to produce dense and accurate motion vector fields at object boundaries in different ways. Many research efforts in this area are known which lie in a technical comparable but with respect to details also fundamental different context: [A1] - [A4] and [B1] - [B5].

Problem

Motion estimation shall provide information about the motion of an object over several time instances. The output of a motion estimator is a motion vector field MVF which describes by means of vectors MV the motion of objects from one position to another, e.g. described between one image and a consecutive one. The motion vectors MV have some distinct value, i.e. either $MV = \vec{V} \neq \vec{0}$ or $MV = \vec{0}$ the latter case describing an absence of motion.

There are some important criteria a motion estimator needs to fulfil:

One is the homogeneity of a motion vector field. It shall assure the correct description of object movement. A second criteria is the accuracy of the motion vector field at object borders. This is important, if the shape of the object needs to be described accurately. By fulfilling those two criteria it is possible to describe the actual movement (trajectory) of objects in a video sequence. A third criteria is, as usual for consumer applications, the complexity of the motion estimation algorithm.

Translational movement of a given object implies that the motion vectors assigned to this object are the same within the motion vector field of a respective image or sequence of images. This may be described by the notion of homogeneity of the vector field in or within the object.

For other movements like rotations the concept may be is similar. The motion vector field for the object is concentric to the rotation point and increases its magnitude in radial direction. The point in common for both types of movement is that the motion vector field of the object or its background is being coherent and following mathematical principles of an affine transformation.

The notion of homogeneity of a motion vector field it is tried to express the concept of integrity of the motion vector field for a given entire object. The object shall be fully described and is visually filled by the motion vector field.

The disadvantage of inhomogeneity and inaccuracy can be observed in typical successive processing steps, which use the motion vector field. One example of an application, where it is crucial to have homogenous MVs and high spatial MV accuracy, is in motion compensated frame rate conversion. Here the motion vector field is being used for the correct interpolation, e.g. for a smooth movement of objects in between two consecutive time instances, e.g. between consecutive images.

Very strong artefacts appear, if we do not have homogenous MVs for a moving object. Here interpolation errors appear to happen inside the moving object. As the moving object is tracked by the human eye and the human visual system is very sensitive to those interpolation errors, the results are irritating and lowering the quality of the up-conversion drastically.

A second problem occurs if one assumes that one obtains MVs that are inaccurate at object boundaries. Again the interpolation will fail. In this case the MVs overlap the object boundaries. The object itself keeps its integrity if a homogenous MVF is given but beyond the object boundaries wrong MVs yield again wrong interpolation results. Those errors appear to be a kind of halo around the object, also called halo effect.

For the example of motion compensated frame rate conversion it is therefore necessary to obtain a homogenous and dense, i.e. a spatial high accurate motion vector field. The motion vector field needs to cover exactly the boundaries of the moving objects and the object itself. These requirements are in fact stricter compared to requirements e.g. a coding application may have. If the MVs on moving objects are more detailed and homogenous, the halo and interpolation errors inside the objects will be less.

Many motion estimation applications concentrate on block matching methods for obtaining a homogenous motion vector field. Block matching methods rely usually on matching measures, like the SAD or sum of absolute Differences. The algorithms try to capture the similarity between object by matching blocks using the SAD. A minimum of SAD is considered as a good measure for a match between two compared blocks. A Main goal of those algorithms is to minimize the SAD which is the optimization criteria.

Usually MV block sizes are fixed to e.g. 8 x 8 for frame or 8 x 4 for field input. The resulting motion vector fields are homogenous, but unfortunately less detailed, because of the large block size or high aperture. In this case the MVs overlap usually moving object boundaries. For smaller block sizes, e.g. 2 x 2 block sizes (low aperture) the probability of overlapping of object borders are less, but the SAD looses its significance. The probability to have a mismatch is higher due to the sensibility of the SAD (or other image measures) to noise and lower number of pixel samples. The consequence is an inhomogeneous and inaccurate motion vector field.

Various approaches exist to improve the spatial accuracy of MVs. We distinguish those methods by the following classes:

1) Object-based motion estimation [B5]
2) MV post-processing methods [B4a/b]
3) Optical Flow Estimation [A4]
4) Hierarchical motion estimation [A1, A3, B1]
5) Bi-directional motion estimation [B3]

Ad (1)

In [B5] segmentation is used to perform an object-based motion estimation (for a fixed number of objects) and to provide a dense MV field. The images are segmented in regions/objects and described with parametric motion models. The estimator itself is faster, but performs worse than a block-based motion estimator.

Ad (2)

Other methods are based on MV post-processing, e.g. for refinement methods. This includes simple methods like e.g. block erosion, e.g. for morphological operations. Block erosion is refining for instance larger MV blocks, e.g. 8 x 8 size, to smaller block sizes, e.g. 2 x 2. The process itself is not using any image information during the refinement. Moreover does the process use only MV information and does not refine MVs regarding object borders due to its static definition. More sophisticated methods are using image features for refinement as in [B4a/b]. Here a segmentation is applied in parallel to the motion estimation as an orthogonal process and a post-processing step using homogenization rules is applied. Those rules are using both, the motion and segment information. A problem in this approach is the segmentation step, which requires high computation efforts and is not always reliable enough.

Ad (3)

Another hierarchical motion estimator is presented in [A4]. Here the dense motion vector field is generated directly by determining partial derivates in respect to time and space from brightness values between two successive frames as a kind of e.g. optical flow estimation. The calculation of the dense motion vector field is done hierarchically from larger to finer grids. Here the grid size is being reduced and the optical flow is calculated continuously, which increases the computational load considerably.

Ad (4)

A lower computational third method of motion estimation is the hierarchical (dense) MV field generation. The main idea here is to perform a motion estimation in a hierarchical way. Motion estimation is applied from larger to smaller block-sizes or from sub-sampled frames to higher resolved frames. In [A1] a block motion estimation is applied. As a second step blocks are split regarding a certain threshold or a certain degree of image feature measures and re-estimated using the information of prior estimates. This is applied until the desired MV resolution is achieved. A problem, which arises here is the loss of homogeneity of the MV field by wrong matches inside of an object. Further is the block splitting criteria based solely on image feature measurements and may fail to split at object borders.

Finally, one method of motion estimation for dense motion vectors [B1] tries to adapt the motion estimation resolution, i.e. the respective estimated block sizes to the object boundaries. The motion estimation algorithm is based on the well established 3D-recursive motion estimation algorithm. Starting with an initial motion estimation, certain blocks are split to smaller blocks and re-estimated again, if their matching error is larger than a pre-calculated expected matching error. This expected matching error is proportional to certain block properties, e.g. variance, of which the relations have been determined experimentally. The approach of re-matching blocks using a split criterion is effective and saves many computational steps. Unfortunately is the split criterion not very reliable, because it is based solely on image characteristics, e.g. SAD values and block variances. It leads to wrong decisions when to split a block. In some cases blocks are split, where it is not necessary. In other cases it happens exactly the opposite by not-splitting a block, where it is necessary, e.g. at object borders.

Ad (5)

For improving the accuracy of the object boundaries it is further important to apply a bi-directional match operation, which takes the problem of object occlusion into account. Covering and uncovering areas are considered in the motion estimation process. Occlusion areas are regions, which appear only in one of the time instances (in two-frame estimations) and therefore cannot be estimated correctly. A method described in [B3] is using the 3D-recursive motion estimation (8 x 8 pixel blocks), but does not estimate only between frame instance (t-1) and (t) but also from (t) to (t+1). Herewith the motion vectors for covering / uncovering areas are determined correctly and are closer to the object boundaries. Nevertheless, the estimation process uses only 8 x 8 pixel blocks, which does not allow to obtain an accurate dense MV field.

The hierarchical and bi-directional way of motion estimation seems to be the most suitable way for producing a dense motion vector field. First it prevents the aperture problem and noise sensitiveness by matching with a larger block size. Second it refines the motion vector field closely to the object boundary and third it deals with occlusion areas.

In prior approaches MV refinement is achieved usually in a hierarchical way of MV re-estimation. But continuous re-estimating has two side effect with the high computational load and the high probability of introducing MV outliers. Moreover a less computational variation was proposed to use a split criterion based on image features and re-estimation of those split blocks. Unfortunately this also leads to erroneous MVs due to failure of the image feature measurements. The consequence is an inhomogeneous and inaccurate MV field, where you get strong visible artefacts in the format conversion example.

It seems to be necessary to decouple the measure on which the ME process is based on, e.g. SAD or other image measures. It is more important to use information, which is not depending primarily on image measures, but supports the decision process of MV refinement. Herewith, we would obtain accurate and homogenous motion vectors for moving objects that are independent of image measures and hence do not have to solve the SAD optimization problem.

Solution

We propose a method, which analyses and refines motion vectors in a hierarchical and recursive way. The invention solves the problem of a restricted ME process by decoupling the MV refinement from image features. This is achieved by not using solely image measures like e.g. SAD, on which a ME process may be based on. We intend to use MV field measurements in our refinement process to obtain a more accurate and dense MV field.

First we define initial regions, which shall hold MVs describing the movement between two consecutive video images. This means that we apply an initial grid layer to the image. This initial grid shall be refined later in a recursive manner and can be defined in various ways. A simple definition of a grid e.g. is a quadratic block grid as can be seen in Figure 3. Differing grids are also possible, e.g. rectangle, triangle or other grids one can think of, as shown in Figs. 4 and 5. The initialization grid layer may even be based on an image segmentation map.

The initial MV grid is filled with the results of a first motion estimation step. Then a method of re-estimation and/or refinement of the prior estimates is executed. This is initiated with the knowledge or predictor values of the first or preceding estimation. The refinement consists of a minimum two steps: First all regions, which are adjacent to differing MVs are considered to be split. In case of e.g. rectangles the region is sub-divided in the horizontal and vertical direction into sub-regions. In case of e.g. segmented regions the region is further segmented to smaller sub-regions. Second we re-estimate the MVs of those sub-divided regions. In the following we will describe this in more detail:

Let in an initial MV field one cell cMV of the motion vector filed MVF or actual region $R0$ with a motion vector $MV = \vec{V}_{R0}$ and N regions $R_{Border} = \{R1,...,RN\}$ surrounding the actual region $R0$ be given. Surrounding in this context means that every region $Rk$ is considered which at least touches the actual region $R0$ by only one image unit, e.g. by one pel. Now, the actual region $R0$ will be split if the following condition or relation (1) is true:

$$\Delta = \frac{1}{N} \sum_{k=1}^{N} \left\| \vec{V}_{Rk} - \vec{V}_{R0} \right\| > \alpha , \qquad (1)$$

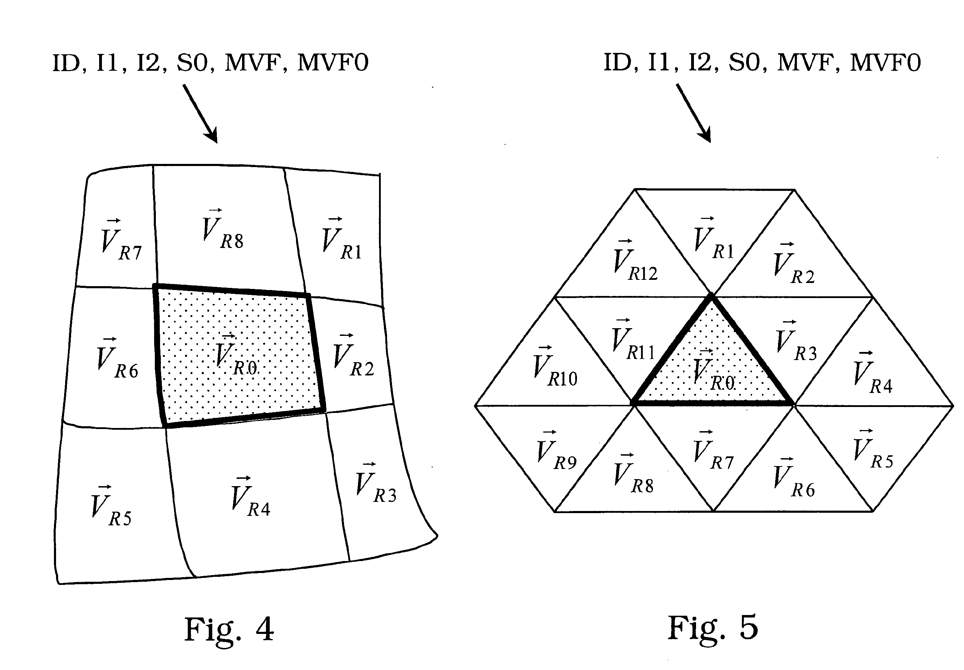

wherein $\alpha \in (0,\infty)$. The case $\alpha \to \infty$ would prohibit to split any region and keep the initial motion estimation. The case $\alpha = 1$ only splits regions, for which the motion of any neighbouring region differs by 1. Also, a region will not be split in case of sub-pel (<1) vector value differences. In Figs. 4 and 5 two examples of surrounding regions and their central (actual) region are shown.

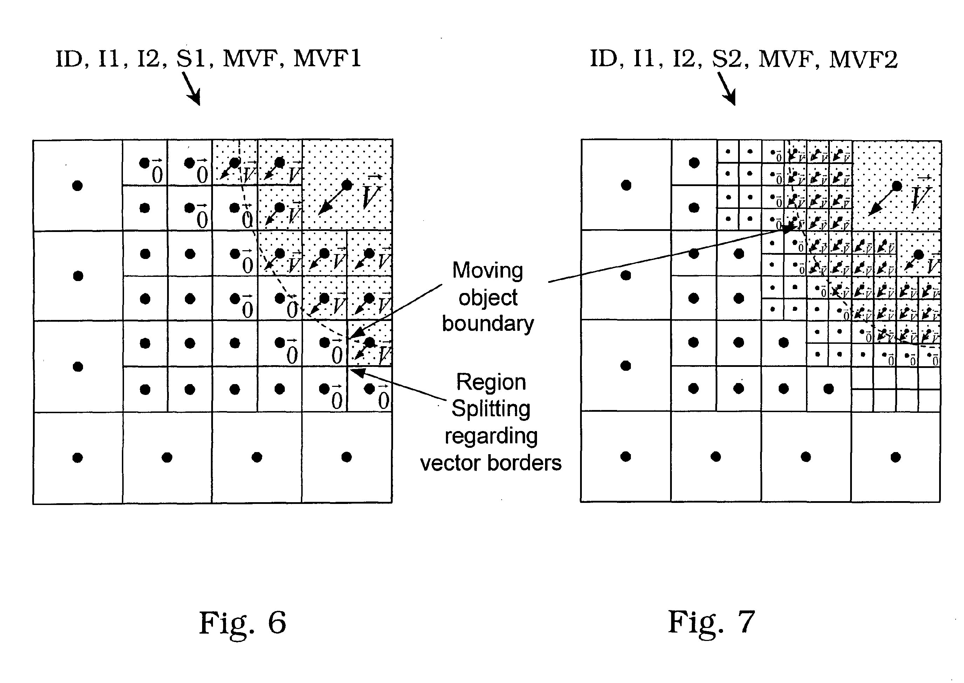

By the usage of relation (1) one obtains a map consisting of MV borders. After the first processing step of splitting regions regarding the MV border map, we suggest to re-estimate the MVs for those split regions by using prior estimation results. In Figs. 6 and 7 an example is shown of how regions may be split and the re-estimation may closer match the object boundary.

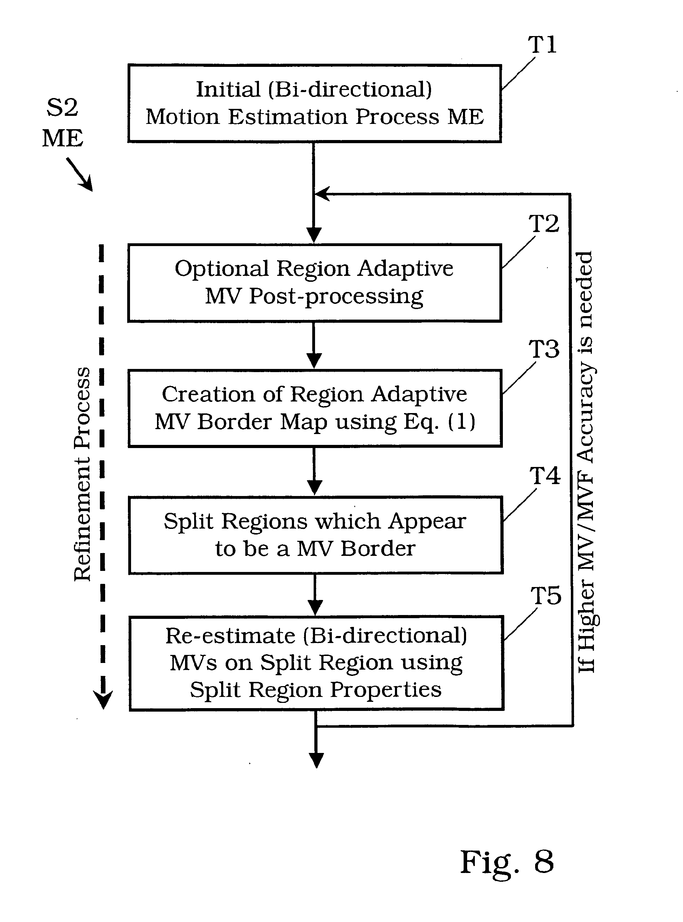

The re-estimation and refinement process works recursively. After the first re-estimation a second MV border map is determined and a second re-estimation step follows. The re-estimation steps, i.e. the refinement will be repeated until the desired MV accuracy is achieved or the physical limit, i.e. one MV per pixel is reached. A block diagram giving an overview of the proposed method is shown in Fig. 8.

A conclusion which can be drawn from Figs. 6 and 7 is that the density of the MV field and the degree of convergence to the moving object boundary is determined by the algorithm's region size minimum. The smaller the final MV region is, the better the MV field borders will match the object contours.

Basic features

The proposed algorithm furthermore may have in particular the following features:

- For lowering the computational load we split blocks only at MV boundaries - see relation (1) - for re-estimation, which highly correlate with object boundaries. This is in fact a better criteria in comparison to image measurements like block variance, edge detection or SAD measures.

- The estimation process itself is not restricted. Our method can be applied to various motion estimation methods, beginning from straightforward full search to more sophisticated methods like 3D-recursive block matching.

- The region matching criterion itself is not restricted. Simple criteria like SAD can be used as well as other more complex criteria, like phase correlation functions.

- Moreover it is possible to include cleaning steps or even morphological operations before the splitting processes for obtaining even more homogeneous MV fields and to achieve a reduction of computational cost, see Fig. 8. MV field cleaning means to eliminate the MV of a region, which differs by far from the MVs of all surrounding regions. Consequently, the region would not be split and no re-estimation applied.

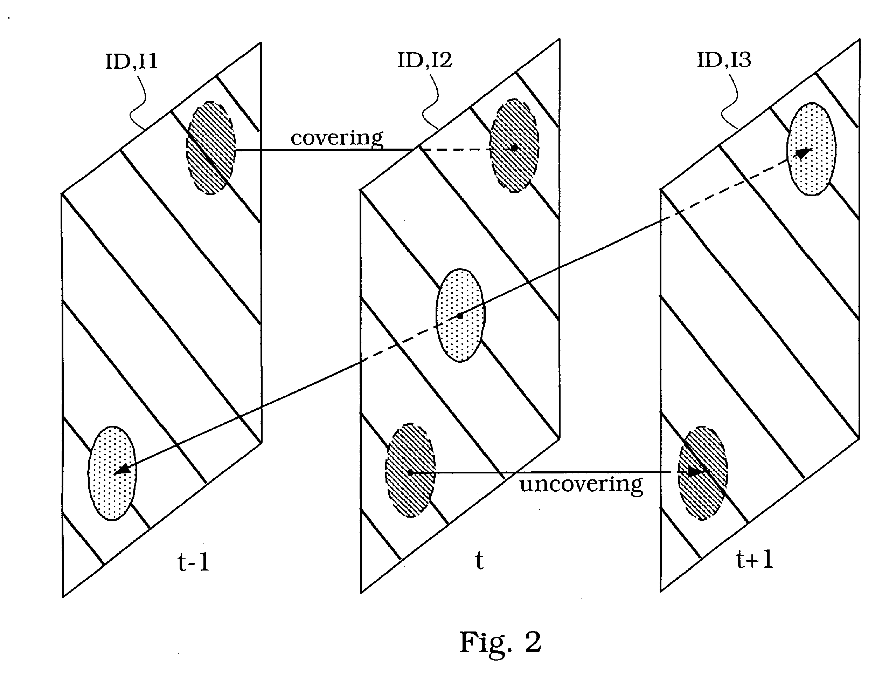

- For preventing the occlusion problem and therefore for reducing the halo effect in motion estimation and to obtain accurate MVs even at moving object boundaries we perform a bi-directional estimation. Herewith it is possible to prevent covering/uncovering issues which occur e.g. due to moving objects over a textured background, see also Fig. 2. The bi-directional estimation process is applied in every re-estimation step for providing the most suitable vector for the actual region. This improves the convergence of the re-estimation.

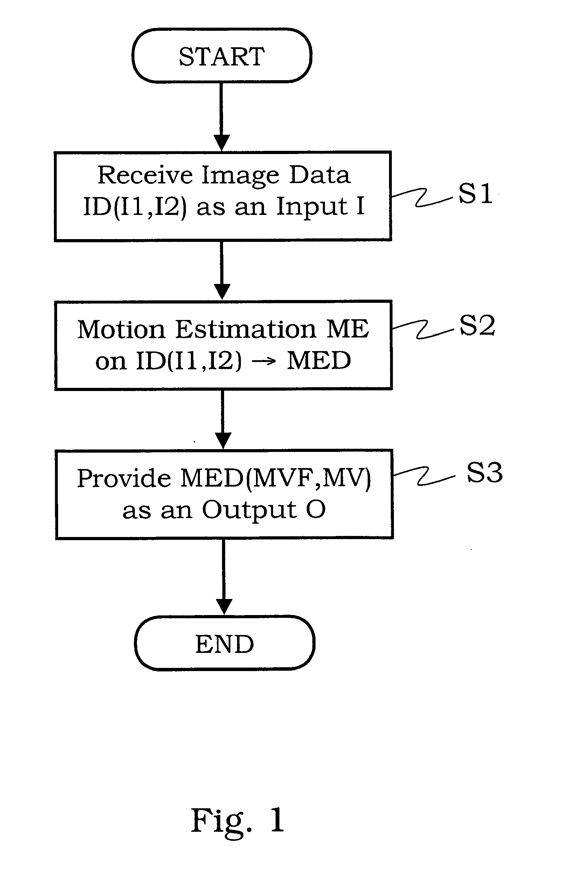

It is found that by re-estimating regions, fulfilling the criteria in relation (1) and by processing as suggested in Figs. 1 and/or 8 in a recursive way, e.g. by hierarchical down scaling of MV regions, is effective with respect to computational costs and it also provides a smooth convergence of the MV field to the moving object boundaries. This is one primary goal.

Advantageous Differences

The proposed method is providing homogenous MVs inside objects, but also high accurate MVs at borders of objects. This is achieved using an hierarchical estimate criterion, which does not rely solely on image features. In other hierarchical motion estimation methods prior motion estimates are used only as predictors for the next refinement step. Prior motion estimates are considered not only as predictors, but use them also for obtaining a more sophisticated splitting criteria.

For a refinement it is avoided to use complex segmentation or image feature measurements for detecting objects and refining afterwards the MVs using those measurements. This is, as already mentioned to complex and leads also in many cases to non reliable results.

Also a sole SAD optimization is prevented which has many problems due to the accuracy/homogeneity (high aperture) dilemma which is connected to small apertures and high apertures, respectively. The presented solution is an iterative refinement of MVs based on prior motion estimates which is converging fast against moving object boundaries without using complex image feature measurements.

The principle is to re-estimate motion vectors only in the area of motion vector borders. Low motion means: low amount of re-estimations and saving of computation time. The computational complexity is not depending on image features, but on the amount and properties of moving objects.

The presented method is adjustable in its spatial accuracy due to hierarchical composition of motion estimation process, but also in its refinement accuracy, i.e. with respect to a splitting on e.g. a pixel or a sub-pixel basis. We also want to point out that our method is applicable to any region-based motion estimation process and suitable for software implementation.

Advantages of our method can be seen in further video processing steps, like format conversion. Interpolation artefacts are reduced by the higher homogeneity and spatial accuracy.

The invention will now be explained based on preferred embodiments thereof and by taking reference to the accompanying and schematical figures.

Fig. 1    is a schematical block diagram which elucidates by means of a flow charge some basic ideas of an embodiment of the method for processing digital image data according to the present invention.

Fig. 2    demonstrates some properties of a prior art method for processing digital image data.

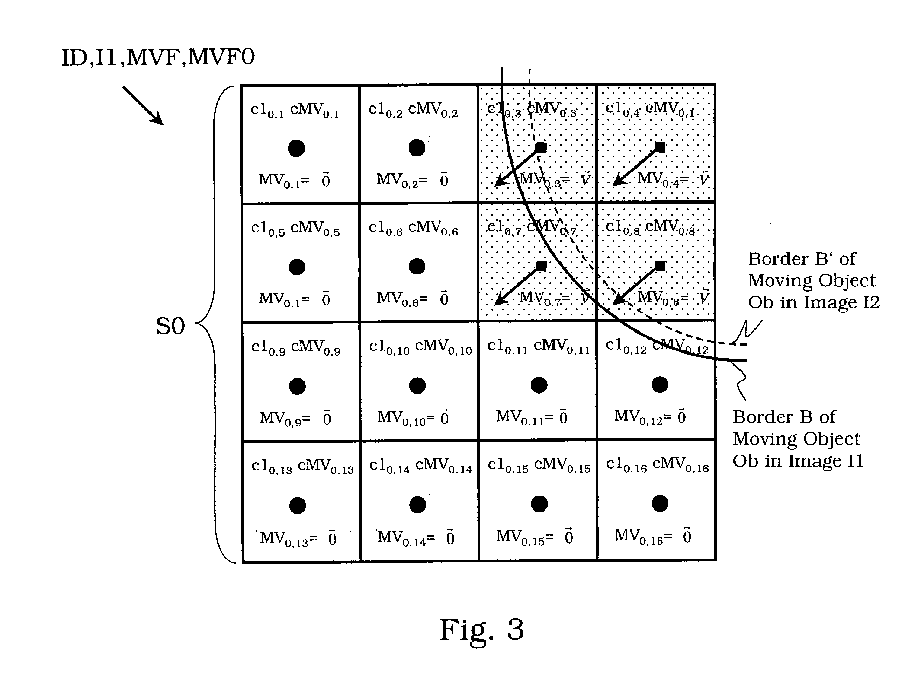

Fig. 3    elucidates by means of a schematical diagram properties of a further embodiment of the method for processing digital image data according to the present invention.

Fig. 4    demonstrates properties of a further embodiment of the inventive method for processing digital image data.

Fig. 5    demonstrates properties of still a further embodiment of the inventive method for processing digital image data.

Fig. 6    demonstrates further properties of the embodiment of Fig. 3 for the inventive method for processing digital image data.

Fig. 7    demonstrates further properties of the embodiment of Fig. 3 for the inventive method for processing digital image data.

Fig. 8    is a further schematical block diagram which elucidates by means of a flow charge some basic ideas of another embodiment of the method for processing digital image data according to the present invention.

In the following functional and structural similar or equivalent element structures will be denoted with the same reference symbols. Not in each case of their occurrence a detailed description will be repeated.

Fig. 1 is a schematical diagram demonstrating by means of a flow chart some basic aspects of an embodiment of the method for processing digital image data according to the present invention.

After a initializing step START digital image data ID to be processed are received as input data I in a first step S1. Said data ID may also be provided according to another process, e.g. a process of generating said data ID or a process of recalling previously recorded digital image data ID. Said image data ID are digital image data and are representative or descriptive for at least a first and a second image I1 and I2, respectively.

In a following step S2 a process of motion estimation ME is carried out with respect to said image data ID and the respective images I1, I2. As a processing result motion estimation data MED are generated.

In a following step S3 said motion estimation data MED are provided as an output O. Said motion estimation data MED might comprise or involve a motion vector field MVF or a plurality thereof, each of which being constituted by a plurality of motion vectors MV which are representative or descriptive for the motion of an object Ob which is contained or described by a sequence of images I1, I2.

The described process is finalized by a termination step END.

Of course the process described by the sequence of steps S1 to S3 may be applied to a sequence of consecutive discrete and separate images I1, I2. However the sequence of images being contained in said digital image data ID may be constituted by a larger variety or multiplicity of images, for instance by a video sequence, video stream or the like.

It is intended to have the option to do also bi-directional motion estimation. In this case it is necessary to have and use more than two image data and time instances, e.g. in Fig. 1.

As already described above, the sequence of images of Fig. 2 demonstrates covering/uncovering properties for three different time instances t-1, t, t+1, respectively.

Fig.2 is an example for a motion compensated interpolation of an object in between two time instances. The diagonal movement of an object from the left bottom corner to the top right corner from the time instance of time t-1 to the time instance of time t+1 is demonstrated. The time instance is the time instance, which shall be interpolated. For interpolation information from the time instances t-1 and t+1 is used. For the object, which is depicted as interpolated result in time instance t, the information shown by the pointers is used. Problems may occur in regions, which are covered and uncovered. Those regions only exist in one of the original time instances t-1 and t+1. For the covering region it is necessary to get the image information from time instance t-1, for the uncovering region the information from t+1 is used.

This principle depicted here needs to be considered also in the process of motion estimation. Certainty is necessary about which region is being covered and uncovered. And this is only possible by using more than one time instance in the motion estimation process leading to a bi-directional motion estimation. So it may be necessary to apply the motion estimation in forward and in backward direction, e.g. from time instance n-1 to time instance n and from time instance n→n+1 to time instance or by using even more far time instances.

Fig. 3 illustrates by means of a schematical diagram some basic aspects underlying the present invention.

Fig. 1 shows a part of the digital image data ID to be processed, i.e. a digital image I1 which describes an object Ob having a border or boundary B. The digital image I1 of Fig. 3 is divided or sub-divided into an initial subdivision S0 comprising a set of 16 image cells $c1_{0,k}$ or image elements $c1_{0,k}$ with k = 1, ..., 16. In the initial phase of the inventive method for processing digital image data said image I1 is initially subdivided into 16 image cells $c1_{0,1}$, ..., $c1_{0,16}$ or image elements $c1_{0,1}$ ,... $c1_{0,16}$ which completely covers said image I1.

The distinct cells $c1_{0,k}$ may also be referred to as regions or image regions in the sense of the invention. Regions surrounding or neighbouring a given or selected central region R0 may be counted from n = 1 to n = $N_{neighbour}$ and may be denoted by R1 to R $N_{neighbour}$ if there are neighbourhood regions R1 to R $N_{neighbour}$ given for R0.

As can be seen from Fig. 3, the border B and therefore the object Ob contained or described by image I1 covers, intersects or at least touches a certain subset of the set of image cells $c1_{0,k}$. Additionally, a second border B' for the same object Ob is indicated in Fig. 3. The second border B' is referred to as the same border B of the same object Ob but for a consecutive image I2 with respect to the same subdivision S0.

From the indicated movement of the object Ob shown in image I1 when compared to a consecutive image I2 motion vectors $MV_{0,k}$ are estimated or calculated. This is done by applying a motion estimation process ME with respect to pairs of consecutive digital images I1, I2, as indicated in Fig. 3.

Therefore, in Fig. 3 each image cell or image element $cl_{0,k}$ has assigned thereto a respective motion vector cell $cMV_{0,k}$ and a respective motion vector $MV_{0,k}$ contained therein. If consecutive images I1 and I2 of said digital image data ID to be processed are compared with respect to each other one obtains four image cells $cl_{0,k}$ an therefore four respective motion vector cells $cMV_{0,k}$ having a non-zero motion vector MV if and only if k has one of the following values: 3, 4, 7, 8. For all other image cells or image elements $c1_{0,k}$ and the respective motion vector cells $cMV_{0,k}$ with k = 1, 2, 5, 6, 9 - 16 one has an almost vanishing or zero motion vector, i.e.:

$$MV_{0,k} = \vec{V} \neq \vec{0} \text{ for } k \in \{3,4,7,8\}$$

and

$$MV_{0,k} = \vec{0} \text{ for } k \in \{1,2,5,6,9,10,11,12,13,14,15,16\}.$$

In Fig. 3 the image elements or image cells $c1_{0,k}$ form a covering, a pattern or tiling which completely covers as a subdivision or initial subdivision S0 the respective image I1 of the digital image data ID. The same holds for respective initial subdivisions S0 for all other digital images I2 ff. of said digital image data ID. In each case to each image cell $c1_{0,k}$ a respective motion vector cell $cMV_{0,k}$ is assigned thereto. In the case of Fig. 3 for reasons of simplicity each image element or image cell $c1_{0,k}$ is formed as a square region within said digital image I1 of said digital image data ID. Additionally and again for reasons of simplicity, said image cells $c1_{0,k}$ and said motion vector cells $cMV_{0,k}$ are simultaneously indicated in the graphical representation for said first image I1 and the lattice for the initial subdivision S0, i.e. the image I1 and its subdivision S0 with the image cells $c1_{0,k}$ and the motion vector field MVF or MVFO with its motion vectors cells $cMV_{0,k}$ and its motion vectors $MV_{0,k}$ are shown in superposition.

Other base shapes or base forms for said image elements or image cells $c1_{0,k}$, $c2_{0,k}$ are also possible. They are for instance described in Figs. 4 and 5 were also the notion of neighbourhood is described. In each case a central image cell or image region R0 is emphasized as a dotted area. Additionally, all next neighbours for the central regions R0 of interest within said image I1, I2 are indicated and may be evaluated as already described above. Additionally the respective motion vectors are also indicated being zero or non-zero: $\vec{V}_{Rk} = \vec{0}$ , $\vec{V}_{Rk} \neq \vec{0}$ .

Figs. 6 and 7 describe consecutive refinements of images I1, I2, of digital image data Id when starting from an initial subdivision S0 as shown in Fig. 3 for an image I1 of said digital image data ID.

First of all, from the movement of the border B of an displayed object Ob between consecutive images I1 and I2 of said digital image data ID for each motion vector cell $cMV_{0,k}$ each of which corresponding to a respective image element or image cell $cl_{0,k}$ and respective motion vectors $MV_{0,k}$ are determined and evaluated. In a following step it is decided on whether or not an image cell $cl_{0,k}$ and therefore a motion vector cell $cMV_{0,k}$ have to be split up or refined. This is estimated by means of a first or global refinement condition as already described above. If the first or global refinement condition is fulfilled, i.e. it has been classified that a refinement has to be carried out such, it is for each image cell or image element $c1_{0,k}$ and for each motion vector cell $cMV_{0,k}$ if it has to be refined or split up into a plurality of cells $c1_{1,k}$ or $cMV_{1,k}$, respectively.

Each image cell $c1_{0,k}$ and therefore each motion vector cell $cMV_{0,k}$ is split up into a plurality of sub-cells $c1_{1,k}$ and $cMV_{1,k}$ respectively, if and only if at least one neighbourhood cell $c1_{0,k}$ or $cMV_{0,k}$ has or has assigned thereto a motion vector $MV_{0,k}$, which refers to some extent or absolutely from the value of the motion vector $MV_{0,k}$ of the motion vector cell $cMV_{0,k}$ in question.

Therefore according to this algorithm the following cells $c1_{0,k}$ and $cMV_{0,k}$ have to be split up for k = 2, 3, 6, 7, 8, 10, 11, 12, as for these cells $c1_{0,k}$ and $cMV_{0,k}$ at least one neighbourhood cell $c1_{0,k}$ and $cMV_{0,k}$ as a different motion vector $MV_{0,k'}$.

The result of such a refined subdivision S1 with respect to said images I1, I2 of the digital image data ID and the respective motion vector field MV1 is shown in Fig. 6.

As can be seen from Fig. 6 again one can distinguish image cells $c1_{1,k}$ and motion vector cells $cMV_{1,k}$ of the first refined subdivision S1 which have vanishing and non-vanishing motion vectors $MV_{1,k}$ assigned thereto. Based on the same algorithmic description the first refined image cells $c1_{1,k}$ and motion vector cells $cMV_{1,k}$ are again checked on whether or not apply a second refinement in order to obtain a second refined subdivision S2 of said images I1, I2, ... of said digital image data ID and the respective motion vector field MVF. The result of the next and second refinement, i.e. the construction of the second refined subdivision S2 for the images I1, I2, ... and the respective motion vector field MVF is shown in Fig. 7.

In general j may describe the order of refinement j=0 describing the initial subdivision S0 of the images I1, I2, ... of the digital image data ID and j≠0 describing the j-th refinement of said images I1, I2, ... according to a j-th subdivision $S_j$. k may therefore in general describe the numbering of the image cells $c1_{j,k}$, $c2_{j,k}$ of the images I1, I2, ... and $cMV_{j,k}$ of the respective motion vector cells $cMV_{j,k}$. Therefore $c1_{j,k}$ is the k-th image cell of the j-th refinement's subdivision Sj of the digital image I1. Consequently $cMV_{j,k}$ is the k-th motion vector cell of the j-th refined motion vector field MVj corresponding to the j-th subdivision Sj of the respective images I1, I2, ...

Fig. 8 is again a schematical diagram which by means of a flow charts elucidates some more details with respect to the refinement process according to a preferred embodiment of the present inventive method for processing digital image data ID. Therefore, the scheme of Fig. 8 describes a subset of procedures which are carried out during step S2 of motion estimation ME as shown in Fig. 1.

In a first step T1 an initial motion estimation process ME is carried out, preferably in a bi-directional manner, as already mentioned above. This is because of the covering / uncovering issue.

The result of the initial step T1 is fed into the following process T2 of optional region adaptive motion vector post-processing.

The motion vector post-processing methods that may be used may have the purpose to increase the homogeneity of the motion vector field. E.g. cleaning and erosion methods may be suitable. With cleaning it is tried to eliminate noise - for instance single peaks - from the motion vector field in order to obtain more for homogeneity. Single peaks in the motion vector field would cause that the split criterion would be fulfilled and this area would be included in the re-estimation process. With erosion methods the motion vector field is smoothed to a lower motion vector granularity. This can provide a faster convergence of the motion vector field to more round objects. The post-processed motion vector field can be used in both cases for the re-estimation process.

In the following step T3 a region adaptive motion vector border map is generated by using a respective global and/or local refinement conditions, for instance according to equation (1).

Based on the underlying refinement conditions regions of the images I1, I2 contained in said digital image data ID which appear to be a motion vector border or motion vector classified border of a moving object contained in the image data ID are split up or refined in the following step T4.

Then in the following step T5 a motion vector field and the constituting motion vectors are re-estimated - preferably in a bi-directional manner - on the split regions and in particular based on split region properties.

Split region properties may be used in the re-estimation. Split region properties are image features such as region size, texture content, colour, shape etc. So those region properties in the re-estimation process may be used in order to value whether or not the features of matched blocks are similar.

Steps T2 to T5 describe the process of refinement. The process of refinement can be precausively or iteratively repeated if higher accuracy with respect to the description of the motion vector field or the motion vectors is needed.

**Cited References and Literature**

[A1]    Refinement of block motion vectors to achieve a dense motion field, Shane Ching-Feng Hu, US5748247.

[A2]    Method and apparatus for increasing video frame rate, Sharma Ravi, TW448693.

[A3]    Verfahren zur Bestimmung von Blockvektoren für die Bewegungsschätzung, DE19744134.

[A4]    System for the estimation of optical flow, W00196982.

[B1]    Efficient motion estimation with content-adaptive resolution; Ralph Braspenning et al.

[B2]    Motion estimation with quad-tree splines; Richard Szeliski et al., Technical Report - Cambridge Research Laboratories.

[B3]    Occlusion-insensitive motion estimation fro segmentation; G.A. Lunter.

[B4a]   Object based refinement of motion vector fields applying probabilistic homogenization rules; H. Blume et al.

[B4b]   Segmentation in the Loop - Ein iteratives, objektunterstütztes Verfahren zur Bewegungsschätzung; H. Blume et al.

[B5]    Real-time 2-3 pull-down elimination applying motion estimation / compensation in a programmable device; Schutten et al.

**Reference Symbols**

| | |
|---|---|
| **B** | border, boundary of a moving object Ob |
| **B'** | border, boundary of a moving object Ob |
| $c_{j,k}$ | k-th image cell/image element of the j-th refinement for a digital image |
| $c1_{j,k}$ | k-th image cell/image element of the j-th refinement for image I1 |
| $c2_{j,k}$ | k-th image cell/image element of the j-th refinement for image I2 |
| $cMV_{j,k}$ | k-th motion vector cell for j-th refinement MVFj of the motion vector field MV; motion vector cell assigned to image cell #k of j-th subdivision/refinement |
| **ID** | image data, digital image data |
| **I** | image |
| **I1** | image |
| **I2** | image |
| **MV** | motion vector in general |
| $MV_{j,k}$ | motion vector assigned to the respective image cell $c_{j,k}$ and motion vector cell $cMV_{j,k}$ |
| **MVF** | motion vector field in general |
| **MVFj** | motion vector field of/after j-th subdivision/refinement |
| **Ob** | object, moving object |
| **Sj** | j-th subdivision of the images/motion vector field MV |

**Claims**

1.  Method for processing digital image data (ID), comprising:

> - a step (S1) of providing digital image data (ID) to be processed, in particular as input data (I), said digital image data containing at least a sequence of consecutive images (I1, I2),

- a step (S2) of motion estimation (ME) with respect to said images (I1, I2) in order to generate a motion vector field (MVFj; j = 0, 1, 2, ...) of a plurality a motion vectors (MV$_{j,k}$) describing in its entirety the motion of imaged objects in said images (I1, I2) and in order to generate motion estimation data (MED), and
- a step (S3) of providing as a processing result said motion estimation data (MED), in particular as output data (O),
- wherein said step (S2) of motion estimation (ME) is performed based on an subdivision (Sj; j = 0, 1, 2, ...) of said images (I1, I2) into an identical plurality of respective image cells (c1$_{j,k}$, c2$_{j,k}$) completely covering said images (I1, I2) the refinement of said subdivision (Sj; j = 0, 1, 2, ...) of said images (I1, I2) in a neighbourhood of boundaries (B, B') of moving objects (Ob) within said images (I1, I2) being controlled by a first or general refinement condition, and
- wherein said first or general refinement condition is based on properties of an already determined motion vector field (MVFj; j = 0, 1, 2, ...) or a part thereof.

2. Method according to claim 1,
   wherein said first or general refinement condition is based on properties of a most recently determined motion vector field (MVFj-1; j = 1, 2, ...) or a part thereof corresponding to a most recent subdivision (Sj-1; j = 1, 2, ...) of said images (I1, I2).

3. Method according any one of the preceding to claims,
   wherein - if a refinement from a given subdivision (Sj; j = 0, 1, 2, ...) of said images (I1, I2) to a next more refined subdivision (Sj+1; j = 0, 1, 2, ...) of said images (I1, I2) is carried out - an image cell (c1$_{j,k}$, c2$_{j,k}$) is refined if and only if for the corresponding motion vector cell (cMV$_{j,k}$) or motion vector (MV$_{j,k}$) of the corresponding most recent motion vector field (MVFj-1 ; j = 1, 2, ...) a second or local refinement condition is fulfilled.

4. Method according to claim 3,
   wherein said second or local refinement condition is based on properties of a most recently determined motion vector field (MVFj-1; j = 1, 2, ...) corresponding to a most recent subdivision (Sj-1; j = 1 , 2, ...) of said images (I1, I2).

5. Method according to any one of the preceding claims,
   wherein said second or local refinement condition is fulfilled if at least one next neighboured motion vector cell (cMV$_{j,k'}$) or motion vector (MV$_{j,k'}$) of said most recent motion vector field (MVFj-1; j = 1, 2, ...) differs to a given extent from the given motion vector cell (cMV$_{j,k}$) or motion vector (MV$_{j,k}$) in question with respect to its absolute value and/or its direction.

6. Method according to any one of the preceding claims,
   wherein one or both of said first or general refinement condition and said second or local refinement condition are estimated with respect to a part or fraction of said motion vector field (MVFj-1; j = 1, 2, ...), in particular in a spatially restricted or localized manner, in a spatially adaptive manner, depending on image properties, and/or depending on motion classifications, e.g. as being zooming, rotation or the like.

7. Method according to any one of the preceding claims 3 to 5,
   wherein said motion vector cells (cMV$_{j,k}$) and said corresponding motion vector (MV$_{j,k}$) are compared with respect to one of a threshold vector $(\vec{\beta})$ or threshold value ($\beta$).

8. Method according to claim 6,
   wherein said threshold vector $\vec{\beta}$ is a zero vector or threshold value $\beta$ is zero, i. e. $\vec{\beta} = \vec{0}$ and $\beta = 0$, respectively.

9. Method according to claim 6,
   wherein said threshold vector $\vec{\beta}$ differs from a zero vector or said threshold value $\beta$ differs from zero, i. e. $\vec{\beta} \neq \vec{0}$ and $\beta \neq 0$, respectively.

10. Method according to any one of the preceding claims,
    wherein said first or global second refinement condition and/or said second or local refinement condition is based on a respective refinement condition function and in particular on a common refinement condition function ($\Delta$).

11. Method according to any one of the preceding claims,

wherein said refinement condition function ($\Delta$) has for each given motion vector cell ($cMV_{J,k}$) or motion vector ($MV_{j,k}$) of said most recent motion vector field ($MVF_j$-1; j = 1, 2, ...) in question the form

$$\Delta\left(MV_{j,k}\right) = \frac{1}{N_{neighbour}} \cdot \sum_{l=1, l\neq k}^{Nneighbour} \left\|MV_{j,l} - MV_{j,k}\right\|.$$

12. Method according to claim 3,
   wherein said second or local refinement condition is fulfilled for a given image cell ($c1_{j,k}$, $c2_{j,k}$) if said image cell ($c1_{j,k}$, $c2_{j,k}$) is touched or intersected by or positioned in a neighbourhood of a boundary or contour of at least one moving object in said images (I1, I2).

13. Method according to any one of the preceding claims,
   wherein the determination or estimation of motion vectors ($MV_{j+1,k}$) of a following motion vector field ($MVFj+1$; j = 0, 1, 2, ...) according to a following and more refined subdivision ($Sj+1$; j = 0, 1, 2, ...) is based on estimates for the most recent motion vectors ($MV_{j,k}$) of a most recent motion vector field ($MVFj$; j = 0, 1, 2, ...) according to a most recent subdivision ($Sj$; j = 0, 1, 2, ...), in particular as predictor values.

14. Method according to any one of the preceding claims,
   which realizes a process of format conversion.

15. Method according to any one of the preceding claims,
   which realizes a process of frame rate conversion.

16. Apparatus for processing digital image data,
   which is adapted and which comprises means for carrying out a method processing digital image data according to any one of the claims 1 to 15 and the steps thereof.

17. Computer program product,
   comprising computer program means which is adapted to realize a method for processing digital image data according to any one of the claims 1 to 15 and the steps thereof, when it is executed on a computer or a digital signal processing means.

18. Computer readable storage medium,
   comprising a computer program product according to claim 17.

START

Receive Image Data
ID(I1,I2) as an Input I ⟿ S1

Motion Estimation ME
on ID(I1,I2) → MED ⟿ S2

Provide MED(MVF,MV)
as an Output O ⟿ S3

END

Fig. 1

Fig. 2

EP 1 734 767 A1

ID,I1,MVF,MVF0

SO

| $cl_{0,1}$ $cMV_{0,1}$ ● $MV_{0,1}=\vec{0}$ | $cl_{0,2}$ $cMV_{0,2}$ ● $MV_{0,2}=\vec{0}$ | $cl_{0,3}$ $cMV_{0,3}$ ■ $MV_{0,3}=\vec{V}$ | $cl_{0,4}$ $cMV_{0,4}$ ■ $MV_{0,4}=\vec{V}$ |
|---|---|---|---|
| $cl_{0,5}$ $cMV_{0,5}$ ● $MV_{0,1}=\vec{0}$ | $cl_{0,6}$ $cMV_{0,6}$ ● $MV_{0,6}=\vec{0}$ | $cl_{0,7}$ $cMV_{0,7}$ ■ $MV_{0,7}=\vec{V}$ | $cl_{0,8}$ $cMV_{0,8}$ ■ $MV_{0,8}=\vec{V}$ |
| $cl_{0,9}$ $cMV_{0,9}$ ● $MV_{0,9}=\vec{0}$ | $cl_{0,10}$ $cMV_{0,10}$ ● $MV_{0,10}=\vec{0}$ | $cl_{0,11}$ $cMV_{0,11}$ ● $MV_{0,11}=\vec{0}$ | $cl_{0,12}$ $cMV_{0,12}$ ● $MV_{0,12}=\vec{0}$ |
| $cl_{0,13}$ $cMV_{0,13}$ ● $MV_{0,13}=\vec{0}$ | $cl_{0,14}$ $cMV_{0,14}$ ● $MV_{0,14}=\vec{0}$ | $cl_{0,15}$ $cMV_{0,15}$ ● $MV_{0,15}=\vec{0}$ | $cl_{0,16}$ $cMV_{0,16}$ ● $MV_{0,16}=\vec{0}$ |

Border B' of
Moving Object
Ob in Image I2

Border B of
Moving Object
Ob in Image I1

Fig. 3

$\vec{V}_{R7}$  $\vec{V}_{R8}$  $\vec{V}_{R1}$

$\vec{V}_{R6}$  $\vec{V}_{R0}$  $\vec{V}_{R2}$

$\vec{V}_{R5}$  $\vec{V}_{R4}$  $\vec{V}_{R3}$

Fig. 4

$\vec{V}_{R12}$  $\vec{V}_{R1}$  $\vec{V}_{R2}$

$\vec{V}_{R11}$  $\vec{V}_{R3}$

$\vec{V}_{R10}$  $\vec{V}_{R0}$  $\vec{V}_{R4}$

$\vec{V}_{R9}$  $\vec{V}_{R8}$  $\vec{V}_{R7}$  $\vec{V}_{R6}$  $\vec{V}_{R5}$

Fig. 5

EP 1 734 767 A1

ID, I1, I2, S1, MVF, MVF1

ID, I1, I2, S2, MVF, MVF2

Moving
object
boundary

Region
Splitting
regarding
vector borders

Fig. 6

Fig. 7

EP 1 734 767 A1

S2
ME

↘

Refinement Process

| T1 |
|---|
| Initial (Bi-directional) Motion Estimation Process ME |

| T2 |
|---|
| Optional Region Adaptive MV Post-processing |

| T3 |
|---|
| Creation of Region Adaptive MV Border Map using Eq. (1) |

| T4 |
|---|
| Split Regions which Appear to be a MV Border |

| T5 |
|---|
| Re-estimate (Bi-directional) MVs on Split Region using Split Region Properties |

If Higher MV/MVF Accuracy is needed

Fig. 8

**European Patent Office**

**EUROPEAN SEARCH REPORT**

Application Number

EP 05 01 2682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/085599 A (KONINKLIJKE PHILIPS ELECTRONICS N.V; BRASPENNING, RALPH, A., C; DE HAA) 16 October 2003 (2003-10-16) * abstract; claims 1,13-16; figure 1 * * page 4, line 16 - line 26 * * page 8, line 1 - page 12, line 16 * | 1-18 | H04N7/26 H04N5/14 |
| A,D | BRASPENNING R ET AL: "Efficient Motion Estimation with Content-Adaptive Resolution" INTERNATIONAL SYMPOSIUM ON CONSUMER ELECTRONICS, 23 September 2002 (2002-09-23), pages E29-E34, XP002245757 Sections 3.1 and 3.3 * abstract * | 1-18 | |
| A,D | EP 0 801 505 A (TEKTRONIX, INC) 15 October 1997 (1997-10-15) * the whole document * | 1-18 | |
| A | US 6 442 203 B1 (DEMOS GARY E) 27 August 2002 (2002-08-27) * abstract * * column 17, line 53 - line 67 * | 1-18 | TECHNICAL FIELDS SEARCHED (IPC) H04N |

The present search report has been drawn up for all claims

| Place of search | Date of completion of the search | Examiner |
|---|---|---|
| The Hague | 23 November 2005 | Güvener, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 2682

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2005

| Patent document cited in search report | | Publication date | Patent family member(s) | | Publication date |
|---|---|---|---|---|---|
| WO 03085599 | A | 16-10-2003 | AU<br>CN<br>JP<br>US | 2003208559 A1<br>1647113 A<br>2005522762 T<br>2005141614 A1 | 20-10-2003<br>27-07-2005<br>28-07-2005<br>30-06-2005 |
| EP 0801505 | A | 15-10-1997 | US | 5748247 A | 05-05-1998 |
| US 6442203 | B1 | 27-08-2002 | AU<br>CA<br>EP<br>JP<br>WO | 3791501 A<br>2387701 A1<br>1234447 A1<br>2003524949 T<br>0135657 A1 | 06-06-2001<br>17-05-2001<br>28-08-2002<br>19-08-2003<br>17-05-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5748247 A
- TW 448693
- DE 19744134
- WO 0196982 A

**Non-patent literature cited in the description**

- **RALPH BRASPENNING.** *Efficient motion estimation with content-adaptive resolution*
- **RICHARD SZELISKI et al.** Motion estimation with quad-tree splines. *Technical Report - Cambridge Research Laboratories*
- **G.A. LUNTER.** *Occlusion-insensitive motion estimation fro segmentation*
- **H. BLUME.** *Object based refinement of motion vector fields applying probabilistic homogenization rules*
- **H. BLUME.** *Segmentation in the Loop - Ein iteratives, objektunterstütztes Verfahren zur Bewegungsschätzung*
- **SCHUTTEN.** *Real-time 2-3 pull-down elimination applying motion estimation / compensation in a programmable device*